# EUROPÄISCHE PATENTANMELDUNG

(11) **EP 0 761 987 A1**
(43) Veröffentlichungstag der Anmeldung: **12.03.1997**
(21) Anmeldenummer: 96109544.5
(22) Anmeldetag: 13.06.1996
(51) Int. Cl.: F16B 7/04, E06B 3/96

(54) **Profilverbinder**

(30) Priorität: 31.07.1995 DE 19528065
(71) Anmelder: GEALAN WERK Fickenscher GmbH, D-95145 Oberkotzau (DE)
(72) Erfinder: Löwel, Karl, 95032 Hof/Saale (DE)
(74) Vertreter: Fleuchaus, Leo, Dipl.-Ing.

(57) **Zusammenfassung**

Zum Verbinden als Streben, Sprosse oder Pfosten dienendes Kunststoffprofil an der Längsseite eines Gegenprofils ist ein Profilverbinder (10) mit Drehgelenk vorgesehen, welcher mit seinem Gelenkträger (12) in dem Aussteifungshohlraum des einen Profils befestigt ist und in dessen in Wangen (14) schwenkbar gelagerten Drehbolzen (16) eine Zugschraube (17) senkrecht zum Längsprofil einschraubbar ist, um die beiden Teile fest miteinander zu verbinden.

## Beschreibung

Die Erfindung betrifft einen Profilverbinder mit Drehgelenk zum stirnseitigen Befestigen eines ersten Profils an der Längsseite eines zweiten Profils unter Verwendung eines in einen Aussteifungshohlraum einsetzbaren Verbindungselements.

Eine derartige Verbindung von Profilteilen wird sehr häufig benötigt, um zum Beispiel Streben oder Kämpfer zwischen Profilen oder in Tür- bzw. Fensterrahmen glasteilende Sprossen einzusetzen. Auch das Befestigen von Stützpfosten an querverlaufenden Profilen erfordert derartige Verbindungselemente. Dabei ist es insbesondere für Kunststoffprofile üblich, in den Aussteifungshohlraum des Profils Holzstücke einzusetzen, um das Gegenprofil mit den Holzstücken zu verschrauben. Das Einpassen derartigen Holzstücke ist mit einer verhältnismäßig aufwendigen Paßarbeit verbunden und sichert keinen einwandfreien Sitz der Verbindung. In der Praxis werden häufig auch derartige Proile lediglich mit durchgestecken Schrauben fixiert, wobei das Entstehen von Schubkräften in Richtung des längs verlaufenden Profils nicht vermieden werden können und somit eine genaue Verarbeitung äußerst schwierig ist.

Der Erfindung liegt die Aufgabe zugrunde, einen Profilverbinder zu schaffen, der an alle Arten von winkligen Verbindungen anpaßbar ist und eine in der Stoßstelle schubfreie Befestigung gewährleistet, auch wenn die beiden Teile abweichend von einem rechten Winkel spitz oder stumpfwinklig aufeinander stoßen. Eine derartige Verbindung soll schnell, sicher und mit stabiler Verspannung herstellbar sein, wobei die Festigkeit zumindest der Festigkeit entspricht, die beim Verschweißen von Kunststoffprofilen erreichbar ist.

Diese Aufgabe wird erfindungsgemäß dadurch gelöst, daß der Profilverbinder aus einem in den Aussteifungshohlraum des ersten Profils einsteckbaren sowie in dem Aussteifungshohlraum fixierbaren Gelenkträger besteht, daß der Gelenkträger an seinem einen Ende zwei einander gegenüberliegende Wangen trägt, in welchen ein Drehbolzen schwenkbar gelagert ist, und daß eine Zugschraube in den Bolzen im Bereich des Freiraums zwischen den Wangen einschraubbar ist.

Mit einem derartigen Profilverbinder lassen sich an einem Längsprofil unter beliebigen Winkeln anliegende Streben, Kämpfer, Sprossen oder Pfosten befestigen, wobei der Drehbolzen in jeder Winkellage dafür sorgt, daß die eingeleitete Kraft zur Verspannung senkrecht auf die Stoßfläche wirkt und damit das Entstehen von Schubkräften in der Stoßfläche vermieden wird. Zur sicheren Positionierung des Profilverbinders ist vorgesehen, daß der Gelenkträger im Aussteifungshohlraum mittels einer durch die Wandung des Aussteifungshohlraumes verlaufenden Durchsteckschraube fixiert ist. Zur Aussteifung und besseren Kräfteverteilung ist ferner vorgesehen, daß die Zugschraube gegen ein in dem Aussteifungshohlraum des zweiten Profils angeordnetes Druckaufnahmeelement verschraubbar ist, wobei die Zugschraube unter einem Winkel von 90° zum Druckaufnahmeelement verläuft. Dieses Druckaufnahmeelement besteht vorzugsweise aus einer in den Aussteifungshohlraum einschiebbaren U-Schiene. Es ist jedoch je nach der Gestaltung des Aussteifungshohlraumes auch vorgesehen, ein Mehrkantrohr in diesen einzuschieben, wobei die Zugschraube durch eine Bohrung im Profil und Mehrkantrohr einsetzbar und gegen eine Innenfläche des Mehrkantrohres verspannbar ist.

Zur zusätzlichen Kraftaufnahme kann auch vorgesehen sein, daß in die U-Schiene oder das Mehrkantrohr ein Spannklotz zur Aufnahme und Verteilung des durch die Zugschraube einwirkenden Druckes einsetzbar ist.

Die Vorteile und Merkmale der Erfindung ergeben sich auch aus der nachfolgenden Beschreibung von Ausführungsbeispielen in Verbindung mit den Ansprüchen und der Zeichnung. Es zeigen
Fig. 1 ein Profilverbinder gemäß der Erfindung in perspektivischer Ansicht;
Fig. 2 einen in Längsrichtung verlaufenden Schnitt durch eine Profilverbindung unter Verwendung eines Profilverbinders gemäß der Erfindung;
Fig. 3 einen Schnitt längs der Linie III-III der Fig. 2;
Fig. 4 einen Schnitt längs der Linie IV-IV der Fig. 2;
Fig. 5 einen Schnitt durch das Längsprofil im Bereich der Zugschraube mit einer innenliegenden Zugschraube;
Fig. 6 einen Schnitt durch das Längsprofil im Bereich der Zugschraube mit einem in das Druckaufnahmeelement eingesetzten Spannklotz;
Fig. 7 einen Schnitt durch eine Kreuzverbindung.

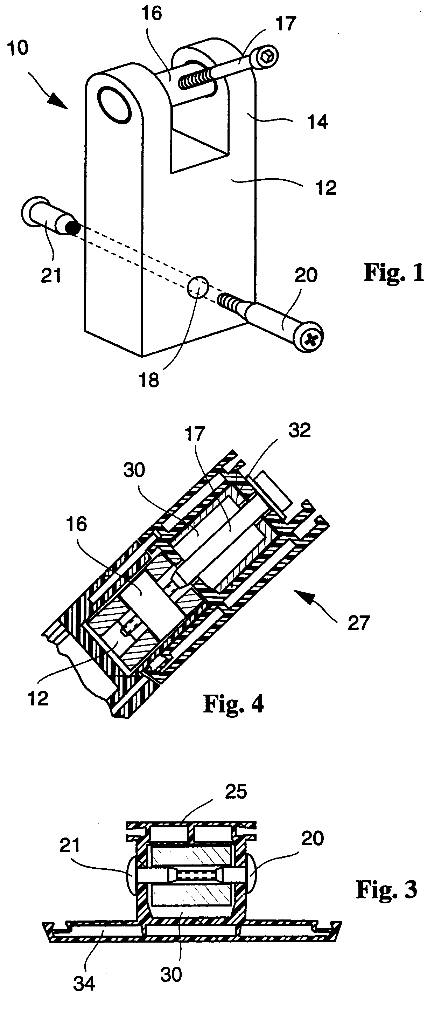

Der in Fig. 1 dargestellte Profilverbinder 10 besteht aus einem Gelenkträger 12, an den oben zwei Wangen 14 anschließen, in welchen ein Drehbolzen 16 vorzugsweise im Paßsitz gelagert ist. Im Zwischenraum zwischen den beiden Wangen 14 ist mit dem Drehbolzen 16 eine Zugschraube 17 radial durch den Drehbolzen verlaufend verschraubt. Im unteren Teil ist der Gelenkträger mit einer Bohrung 18 versehen, in welche eine Durchsteckschraube 20 einsetzbar ist, die auf der Gegenseite mit einer Hülsenmutter 21 zusammenwirkt. Der Gelenkträger kann sowohl aus Kunststoff als auch aus Metall hergestellt sein, wobei eine Zinkgußausführung mit einem hohlen Innenraum zur Gewichtseinsparung als besonders vorteilhaft angesehen wird.

Eine Anwendung des Profilverbinders ist in Fig. 2 dargestellt, die die Verbindung einer Strebe 25 mit einem Blendrahmen 27 aus Kunststoff unter einem Winkel von 45° zeigt. Der Querschnitt der Strebe 25 geht aus Fig. 3 und der Querschnitt des Blendrahmens 27 aus Fig. 4 hervor. Beide Profile sind mit einem Aussteifungshohlraum 30 versehen, wobei in den Aussteifungshohlraum des Blendrahmens 27 ein Druckaufnahmeelement in Form einer U-Schiene 32 eingeschoben ist. Die Strebe 25 ist entsprechend dem Anschlußwinkel winklig angeschnitten, wobei der Profilabschnitt mit dem Aussteifungshohlraum über den außenliegenden Profilabschnitt 34 so weit übersteht, daß dessen Stirnseite an der Außenfläche des den Aussteifungshohlraum umschließenden Profilabschnittes zur Anlage kommt.

Der Profilverbinder wird stirnseitig mit seinem Gelenkträger 12 in den Aussteifungshohlraum 30 eingeschoben, so daß er vollständig im Innern dieses Hohlraumes zu liegen kommt. Mit Hilfe der Durchsteckschraube 20 und der Hülsenmutter 21, die durch die Außenwand des Aussteifungshohlraums greifen, wird der Gelenkträger 12 in seiner Lage fixiert.

Die Wandung des Aussteifungshohlraumes 30 des Blendrahmens 27 ist mit Bohrungen 35 und 36 versehen, mit welchen eine Bohrung 37 in der U-Schiene 32 fluchtet. Die Bohrungen sind derart ausgerichtet, daß die in die Bohrung einzuführende Zugschraube 17 unter einem Winkel von 90° durch den Aussteifungshohlraum und die U-Schiene greifen und in den Drehbolzen 16 der Profilverschraubung einsschraubbar ist. Mit Hilfe dieser Zugschraube 17 wird der innere Profilabschnitt 25 mit der U-Schiene 32 gegen das stirnseitige Ende des inneren Profilabschnittes der Strebe 25 verspannt. Da der Drehbolzen 16 mit seinem Aufnahmegewinde für die Druckschraube in Richtung auf den Blendrahmen ausgerichtet werden kann, ergibt sich die Möglichkeit, die Zugschraube 17 senkrecht durch den Aussteifungshohlraum mit der U-Schiene zu führen und beide Teile gegen die Strebe fest zu verspannen.

Durch den Profilverbinder gemäß der Erfindung ergibt sich somit eine einfache, stabile und sichere Verbindungsmöglichkeit zwischen winklig aufeinanderstehenden Profilen, wobei durch die Verspannung eine Festigkeit erzielbar ist, die bei Kunststoffprofilen über der Festigkeit einer Verschweißung liegt.

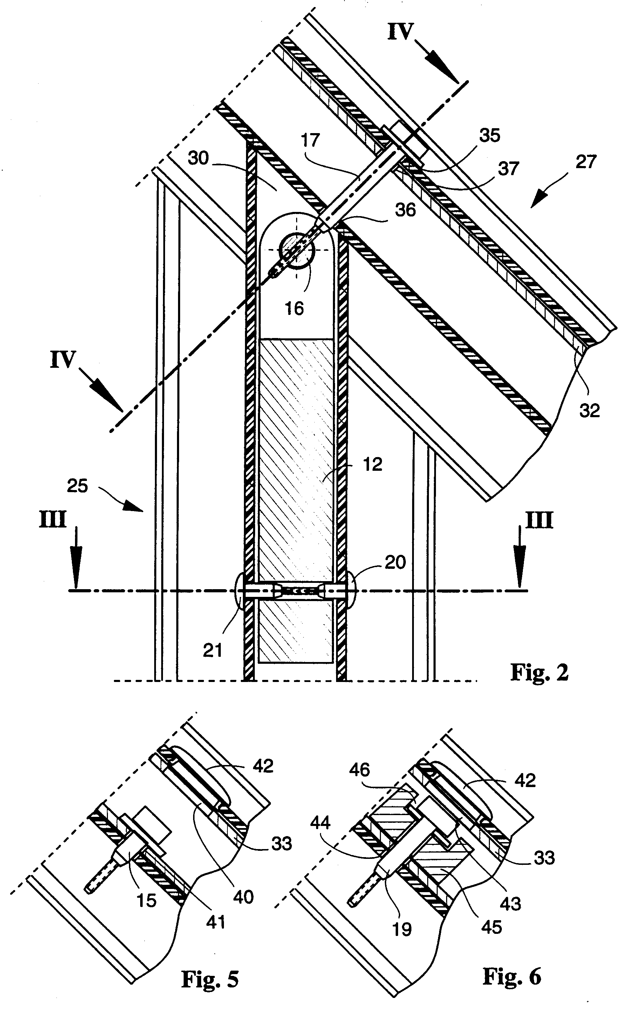

Weitere Ausführungsformen der Erfindung sind in den Figuren 5 und 6 dargestellt, welche unterschiedliche Druckaufnahmeelemente und entsprechend an diese angepaßte Zugschrauben zeigen.

Bei der Ausführungsform gemäß Fig. 5 ist in den Aussteifungshohlraum ein Vierkantprofil eingeschoben, wobei die Bohrungen für das Einsetzen der Zugschraube mit Hilfe eines Stufenbohrers angebracht werden, so daß man im Außenbereich eine Bohrung 40 mit einem großen Durchmesser und im Innenbereich eine Bohrung erhält, deren Durchmesser an den Durchmesser der Zugschraube angepaßt ist. Der außenliegende größere Durchmesser der Bohrung 40 ermöglicht, die Zugschraube mit ihrem Kopf und einer Beilagscheibe durch die Bohrung einzuführen und anliegend an der Innenfläche des Vierkantprofils mit dem nicht dargestellten Drehbolzen 16 zu verschrauben. Nach der Fertigstellung der Verbindung wird die äußere Bohrung 40 im Bereich der Wandung des Aussteifungshohlraumes mit einer Abdeckkappe 42 verschlossen.

Bei der Ausführungsform gemäß Fig. 6 ist eine entsprechende, mit einem Stufenbohrer hergestellte Bohrung mit unterschiedlichem Durchmesser 43 und 44 in dem Aussteifungshohlraum sowie einem Druckaufnahmeelement in Form eines Vierkantrohres 33 vorgesehen. In das Vierkantrohr ist ferner ein Spannklotz 45 eingesetzt, in welchem eine Senkbohrung 46 mit einem dem Durchmesser 43 entsprechenden Durchmesser vorgesehen ist. In dieser Senkbohrung 46 kommt der Kopf der Zugschraube 19 zu liegen.

Die nach außen offene Bohrung in dem Aussteifungshohlraum wird durch eine Abdeckkappe 42 verschlossen.

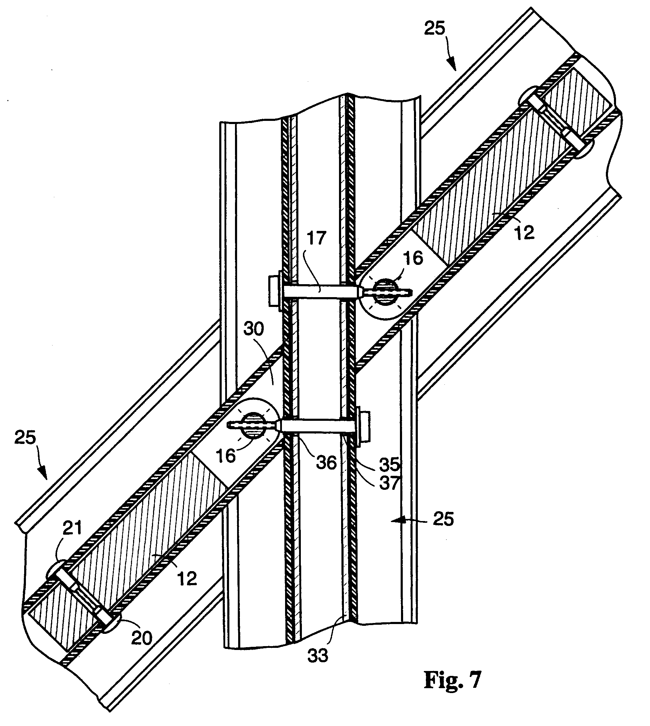

Eine weitere Anwendung von Profilverbindern gemäß der Erfindung geht aus Fig. 7 hervor, bei der diese zur Herstellung einer Kreuzverbindung eingesetzt werden. In der Darstellung sind gleiche Teile mit gleichen Bezugszeichen versehen.

In den Aussteifungshohlraum 30 eines senkrecht verlaufenden Profilabschnittes, z. B. einer Strebe 25, ist ein Vierkantrohr 33 eingesetzt. An diesem Profilabschnitt sind zwei unter einem spitzen Winkel verlaufende Streben 25 angesetzt, wodurch eine Kreuzverbindung entsteht. In den Aussteifungshohlraum der Anschlußprofile ist in bereits beschriebener Weise ein Gelenkträger 12 eingeschoben und mittels einer Durchsteckschraube 20 sowie Hülsenmutter 21 im Aussteifungshohlraum 30 fixiert. Zur Befestigung und Verspannung der Kreuzverbindung sind sowohl in dem Profilabschnitt mit dem Aussteifungshohlraum als auch in dem Vierkantrohr Bohrungen 35, 36 und 37 angebracht, durch welche die Zugschraube 17 in den Drehbolzen 16 des zugehörigen Gelenkträgers eingeschraubt ist. Wegen der Verstellbarkeit des Drehbolzens 16 können Kreuzverbindungen hergestellt werden, bei welchen die Anschlußwinkel in einem verhältnismäßig großen Bereich variabel gestaltet werden können.

## Patentansprüche

1. Profilverbinder mit Drehgelenk zum stirnseitigen Befestigen eines ersten Profils and er Längsseite eines zweiten Profils unter Verwendung eines in einen Aussteifungshohlram einsetzbaren Verbindungselements,
**dadurch gekennzeichnet,**
daß der Profilverbinder (10) aus einem in den Aussteifungshohlraum (30) des ersten Profils (25) einsteckbaren sowie im Aussteifungshohlraum fixierbaren Gelenkträger (12) besteht,
daß der Gelenkträger (12) an seinem einen Ende zwei einander gegenüberliegende Wangen (14) trägt, in welchen ein Drehbolzen (16) schwenkbar gelagert ist,
und daß eine Zugschraube (15, 17, 19) in den Drehbolzen (16) im Bereich des Freiraums zwischen den Wangen einschraubbar ist.

2. Profilverbinder nach Anspruch 1,
**dadurch gekennzeichnet,**
daß der Gelenkträger (12) im Aussteifungshohlraum (30) mittels einer durch die Wandung des Aussteifungshohlraums verlaufenden Durchsteckschraube (20, 21) fixierbar ist.

3. Profilverbinder nach Anspruch 1 oder 2,
**dadurch gekennzeichnet,**
daß die Zugschraube (15, 17, 19) gegen ein in dem Aussteifungshohlraum (30) des zweiten Profils (27) angeordnetes Druckaufnahmeelement (32, 33, 35) verschraubbar ist, wobei die Zugschraube (15, 17, 19) unter einem Winkel von 90° zum Druckaufnahmeelement verläuft.

4. Profilverbinder nach Anspruch 3,
d**adurch gekennzeichnet,**
daß das Druckaufnahmeelement eine in den Aussteifungshohlraum einschiebbare U-Schiene (32) ist.

5. Profilverbinder nach Anspruch 3,
**dadurch gekennzeichnet,**
daß das Druckaufnahmeelement ein in den Aussteifungshohlraum einschiebbares Mehrkanterohr (33) ist, wobei die Zugschraube (15,19) durch eine Bohrung einsetzbar gegen eine Innenfläche des Mehrkantrohres (33) verspannbar ist.

6. Profilverbinder nach Anspruch 4 oder 5,
**dadurch gekennzeichnet,**
daß ein in die U-Schiene (32) oder das Mehrkantrohr (33) einsetzbarer Spannklotz (45) zur Aufnahme und Verteilung des durch die Zugschraube (15, 17,19) applizierbaren Druckes dient.
